# DEMANDE DE BREVET EUROPEEN

(11) **EP 2 592 398 A1**
(43) Date de publication de la demande: **15.05.2013**
(21) Numéro de dépôt: 11306466.1
(22) Date de dépôt: 10.11.2011
(51) Int. Cl.: G01F 25/00, F16K 37/00

(54) **Banc métrologique de compteur de fluide**

(71) Demandeur: Itron France, 92130 Issy-Les-Moulineaux (FR)
(72) Inventeur: Gonzalez, Patrick, 69400 Arnas (FR)
(74) Mandataire: Howson, Richard G.B.

(57) **Abrégé**

L'invention concerne u banc métrologique de compteur de fluide, en particulier d'eau, comportant une vanne (2) de déviation d'un volume de fluide à partir d'un circuit de circulation général vers un compteur de fluide, afin d'en vérifier la précision, cette vanne (2) étant actionnée par un vérin rotatif (1).

Selon l'invention, le banc comporte un dispositif de réglage d'un capteur (7) de détermination du temps de manoeuvre de ce vérin (1), de sorte que le temps d'ouverture et le temps de fermeture mesurés par le capteur et correspondant à un déplacement aller et à un déplacement retour du vérin soient égaux.

## Description

L'invention concerne un banc métrologique de compteur de fluide, en particulier d'eau.

La fonction d'un tel banc est de vérifier la précision de mesure d'un compteur d'eau. Il s'agit donc de faire circuler dans le compteur un volume d'eau très précis et de vérifier que la mesure annoncée par le compteur est exact.

Ce volume d'eau est dévié d'un circuit de circulation général par ouverture d'une vanne au moyen d'un actionneur. Cet actionneur peut être un vérin rotatif qui passe d'une première position d'extrémité de fermeture de la vanne à une seconde position d'extrémité d'ouverture de la vanne, reste à cette position pour laisser passer le volume de mesure avec la vanne ouverte, puis passe de cette seconde position d'extrémité d'ouverture de la vanne à cette première position d'extrémité de fermeture de la vanne.

Pour assurer le passage d'un volume d'eau très précis par calcul au travers de la vanne, il faut contrôler précisément le temps de manoeuvre du vérin durant ce déplacement d'aller et de retour, d'ouverture et de fermeture de la vanne. Le temps mesuré d'ouverture et le temps mesuré de fermeture doivent être les plus proches possibles, afin de s'équilibrer et d'assurer un calcul exact et aisé du volume d'eau traversant la vanne.

Pour ce faire, il est connu d'équiper le vérin d'une lame solidarisée à son arbre rotatif et dont le déplacement est contrôlée par un module électronique placé sur son trajet. Cette lame peut être constituée d'un disque pourvu d'une portion de disque d'angle au centre de 60 degrés, le parcours total étant d'un quart de tour de cet arbre, et le déplacement de cette portion de disque entraîne l'occultation ou le passage d'un ou de deux rayon(s) optique(s) du capteur.

L'objet de l'invention est de proposer un banc équipé d'un dispositif de réglage précis de cette lame, afin d'assurer un temps d'ouverture et un temps de fermeture égaux.

Pour ce faire, l'invention propose un banc métrologique de compteur de fluide, en particulier d'eau, comportant une vanne de déviation d'un volume de fluide à partir d'un circuit de circulation général vers un compteur de fluide, afin d'en vérifier la précision, cette vanne étant actionnée par un vérin rotatif, caractérisé en ce qu'il comporte un dispositif de réglage d'un capteur de détermination du temps de manoeuvre de ce vérin, de sorte que le temps d'ouverture et le temps de fermeture mesurés par le capteur et correspondant à un déplacement aller et à un déplacement retour du vérin soient égaux.

Selon un mode de réalisation préféré, le banc comporte une lame solidaire de l'arbre rotatif du vérin et constituée d'un disque pourvu d'une portion de disque radiale, le déplacement de cette portion de disque étant contrôlé par l'occultation ou le passage d'au moins un rayon optique d'un capteur électronique.

De préférence, ledit dispositif de réglage comporte une pièce de butée solidaire de l'arbre rotatif du vérin et deux vis de réglage solidaires dudit disque et en butée de chaque côté de ladite pièce de butée.

Ladite pièce de butée est avantageusement fixée sur une platine comportant un orifice central recevant l'arbre rotatif du vérin avec solidarisation en rotation.

Lesdites vis de réglage sont de préférence coaxiales et vissées sur deux pièces fixées audit disque.

Le banc comporte avantageusement une vis d'ablocage solidarisant ledit disque sur l'arbre du vérin, après réglage.

L'invention est décrite ci-après plus en détail à l'aide de figures ne représentant qu'un mode de réalisation préféré de l'invention.
La figure 1 est une vue en perspective partielle d'un banc métrologique de compteur de fluide, en particulier d'eau, conforme à l'invention.
La figure 2 est une vue en perspective partielle éclatée d'un banc métrologique de compteur de fluide, en particulier d'eau, conforme à l'invention.
Les figures 3 et 4 sont des vues en perspective partielles d'un banc métrologique de compteur de fluide, en particulier d'eau, conforme à l'invention.

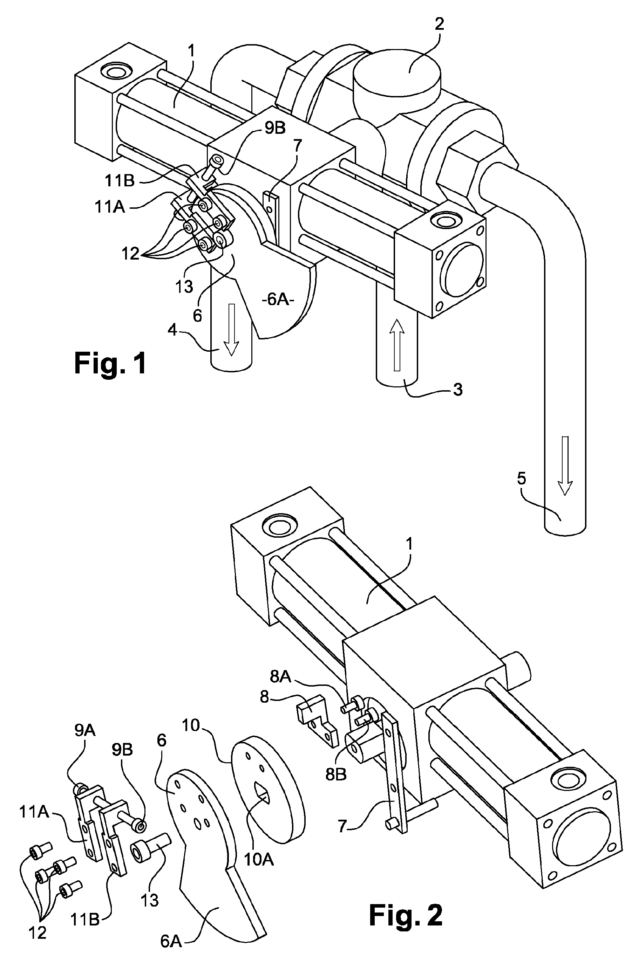

Comme représenté sur les figures 1 et 2, dans un banc métrologique, un volume d'eau est dévié d'un circuit de circulation général par ouverture d'une vanne ici à trois voies 2 au moyen d'un actionneur. Cet actionneur est un vérin rotatif 1 qui passe d'une première position d'extrémité de fermeture de la vanne à une seconde position d'extrémité d'ouverture de la vanne, reste à cette position pour laisser passer le volume de mesure avec la vanne ouverte, puis passe de cette seconde position d'extrémité d'ouverture de la vanne à cette première position d'extrémité de fermeture de la vanne.

La vanne 2 est alimentée en eau par une conduite d'arrivée 3 et présente deux voies de sortie, une conduite de sortie 4 vers une cuve du circuit de circulation général et une conduite de sortie 5 vers un réservoir d'étalonnage où le volume d'eau est vérifié, ce volume d'étalonnage étant destiné à traverser un compteur à étalonner.

Pour assurer le passage d'un volume d'eau très précis calculé au travers de la vanne 2 vers le réservoir d'étalonnage, il faut contrôler très précisément le temps de manoeuvre mesurée du vérin 1 durant ce déplacement d'aller et de retour, d'ouverture et de fermeture de la vanne 2. Le temps d'ouverture et le temps de fermeture mesurés doivent être les plus proches possibles, afin de s'équilibrer et d'assurer un calcul exact et aisé du volume d'eau traversant la vanne 2.

Selon l'invention, le banc comporte un dispositif de réglage d'un capteur 7 de détermination du temps de manoeuvre de ce vérin 1, de sorte que le temps d'ouverture et le temps de fermeture mesurés par le capteur 7 et à un déplacement aller et correspondant à un déplacement retour du vérin 1 soient égaux.

Il comporte une lame 6 solidaire de l'arbre rotatif du vérin 1 et constituée d'un disque pourvu d'une portion de disque radiale 6A, de préférence d'angle au centre de 60 degrés, le déplacement de cette portion de disque 6A étant contrôlé par l'occultation ou le passage de deux rayons optiques d'un capteur électronique 7. Ce disque 6 est fixé et bloqué sur l'arbre rotatif du vérin par une vis d'ablocage 13, après réglage.

Le dispositif de réglage comporte une pièce de butée 8 solidaire de l'arbre rotatif du vérin 1 et deux vis de réglage 9A, 9B solidaires du disque 6 et en butée de chaque côté de la pièce de butée 8.

Plus précisément, la pièce de butée 8 est fixée au moyen de deux vis 8A, 8B sur une platine 10 comportant un orifice central 10A, de préférence carré, recevant l'arbre rotatif du vérin 1 avec solidarisation en rotation.

Les vis de réglage 9A, 9B sont coaxiales, d'axe perpendiculaire à l'arbre rotatif du vérin 1, et vissées sur deux pièces 11A, 11B fixées au disque 6 au moyen de vis 12.

La mise en oeuvre du dispositif de réglage conforme à l'invention est le suivant.

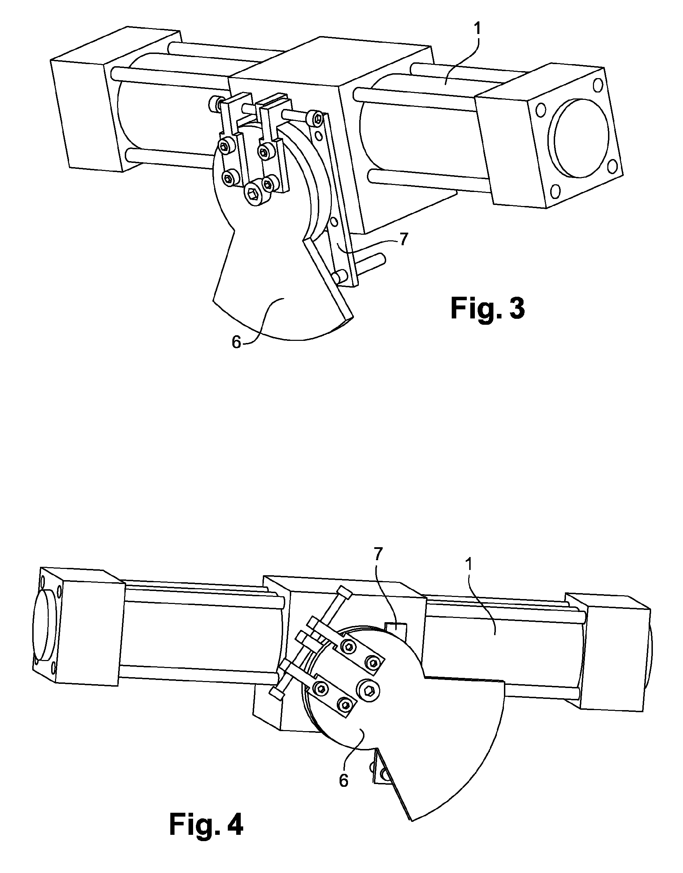

Le dispositif est dans la position centrée représentée sur la figure 3, lorsque le vérin 1 est dans sa position d'extrémité correspondante à la fermeture de la vanne 2, en ce qui concerne l'étalonnage. Autrement, dit lorsque l'eau circule dans le circuit de circulation générale de la conduite 3 vers la conduite 4.

Ce vérin est ensuite déplacé jusqu'à sa position d'extrémité opposée, correspondante à l'ouverture de la vanne 2, en ce qui concerne l'étalonnage. Autrement, dit lorsque l'eau circule vers la cuve d'étalonnage de la conduite 3 vers la conduite 5. Cette position est représentée sur la figure 4.

Le temps de manoeuvre t₁ correspondant à ce déplacement aller est mesuré grâce au capteur électronique 6.

Le vérin est ensuite déplacé jusqu'à sa position d'extrémité initiale représenté sur la figure 3, dans sa position d'extrémité correspondante à la fermeture de la vanne 2, en ce qui concerne l'étalonnage. Autrement, dit lorsque l'eau circule dans le circuit de circulation générale de la conduite 3 vers la conduite 4.

Le temps de manoeuvre t₂ correspondant à ce déplacement retour est mesuré grâce au capteur électronique 6.

Les deux temps t₁ et t₂ sont comparés et, s'ils diffèrent, une des vis de réglage 9A, 9B est vissée contre la pièce de butée 8 pour régler le positionnement relatif du disque 6, le vissage de la seconde vis de réglage contre la pièce de butée 8 assurant le blocage de la position.

La vis d'ablocage 13 est bloquée, une fois le positionnement relatif correct réglé.

## Revendications

1. Banc métrologique de compteur de fluide, en particulier d'eau, comportant une vanne (2) de déviation d'un volume de fluide à partir d'un circuit de circulation général vers un compteur de fluide, afin d'en vérifier la précision, cette vanne (2) étant actionnée par un vérin rotatif (1), **caractérisé en ce qu'**il comporte un dispositif de réglage d'un capteur (7) de détermination du temps de manoeuvre de ce vérin (1), de sorte que le temps d'ouverture et le temps de fermeture mesurés par le capteur et correspondant à un déplacement aller et à un déplacement retour du vérin soient égaux.

2. Banc selon la revendication précédente, **caractérisé en ce que** qu'il comporte une lame solidaire de l'arbre rotatif du vérin (1) et constituée d'un disque (6) pourvu d'une portion (6A) de disque radiale, le déplacement de cette portion de disque (6A) étant contrôlé par l'occultation ou le passage d'au moins un rayon optique d'un capteur électronique (7).

3. Banc selon la revendication précédente, **caractérisé en ce que** ledit dispositif de réglage comporte une pièce de butée (8) solidaire de l'arbre rotatif du vérin (1) et deux vis de réglage (9A, 9B) solidaires dudit disque (6) et en butée de chaque côté de ladite pièce de butée (8).

4. Banc selon la revendication précédente, **caractérisé en ce que** ladite pièce de butée (8) est fixée sur une platine (10) comportant un orifice central (10A) recevant l'arbre rotatif du vérin (1) avec solidarisation en rotation.

5. Banc selon la revendication 3 ou 4, **caractérisé en ce que** lesdites vis de réglage (9A, 9B) sont coaxiales et vissées sur deux pièces (11A, 11B) fixées audit disque.

6. Banc selon une des revendications 2 à 5, **caractérisé en ce qu'**il comporte une vis d'ablocage (13) solidarisant ledit disque (6) sur l'arbre du vérin, après réglage.
